# FASCICULE DE BREVET EUROPEEN

(11) **EP 1 494 042 B1**
(45) Date de publication et mention de la délivrance du brevet: **21.12.2011**
(21) Numéro de dépôt: 04291627.0
(22) Date de dépôt: 28.06.2004
(51) Int. Cl.: G01S 19/08, G01S 19/07

(54) **Serveur de données utilisé dans un système pour la fourniture de données d'augmentation pour les signaux de navigation par satellite**
Datenserver für den Einsatz in einem System zur Anlieferung von Unterstützungsdaten für ein Satellitennavigationssystem
Data server for use in a system providing augmentation data for a satellite navigation system

(30) Priorité: 04.07.2003 FR 0308167
(43) Date de publication de la demande: 05.01.2005
(73) Titulaire: Alcatel Lucent, 75008 Paris (FR)
(72) Inventeur: Charlot, Bernard, 31000 Toulouse (FR); Dunas, Etienne, 31100 Toulouse (FR)
(74) Mandataire: Nicolle, Olivier

(56) Documents cités:
- US-A- 5 365 447
- US-A- 5 786 773
- KINAL G V ET AL: "Inmarsat integrity channels for global navigation satellite systems" PROCEEDINGS OF THE NATIONAL TELESYSTEMS CONFERENCE (NTC). WASHINGTON, MAY 19 - 20, 1992, NEW YORK, IEEE, US, 19 mai 1992 (1992-05-19), pages 3-5-3-8, XP010059580 ISBN: 0-7803-0554-X
- VENTURE-TRAVESET, J. ET AL: "Architecture, mission and signal processing aspects of the EGNOS System: the first European implementation of GNSS" DSP 2001 SEVENTH INTERNATIONAL WORKSHOP ON DIGITAL SIGNAL PROCESSING TECHNIQUES FOR SPACE COMMUNICATIONS, [Online] 1 octobre 2001 (2001-10-01), - 3 octobre 2001 (2001-10-03) pages 1-11, XP002273099 Sesimbra, Portugal Extrait de l'Internet: URL:http://esamultimedia.esa.int/docs/egno s/estb/Publications/ DSP%202001/EGNOS_DSP2001.pdf> [extrait le 2004-03-10]

## Description

La présente invention concerne un serveur de données utilisé dans un système pour la fourniture de données complémentaires, dites données d'augmentation, pour les signaux de navigation par satellite. Le serveur selon l'invention est plus particulièrement adapté pour être réalisé avec des éléments compatibles avec ceux utilisés dans la technologie EGNOS (European Geostationary Navigation Overlay Service).

Les données fournies par les systèmes de navigation par satellite GNSS (Global Navigation Satellite System) du type GPS (Global Positioning System) ou GLONASS sont largement améliorées par l'utilisation de la technologie SBAS (Satellite-Based Augmentation Systems). Cette technologie apporte une correction supplémentaire par satellite à la précision du système GPS, augmentant ainsi très sensiblement la précision des mesures de position. Elle fournit aussi des garanties d'intégrité et de disponibilité. Les systèmes d'augmentation de la précision du positionnement par satellites SBAS sont découpés en trois zones : l'EGNOS pour l'Europe, le WAAS pour l'Amérique du Nord et le MSAS pour le Japon.

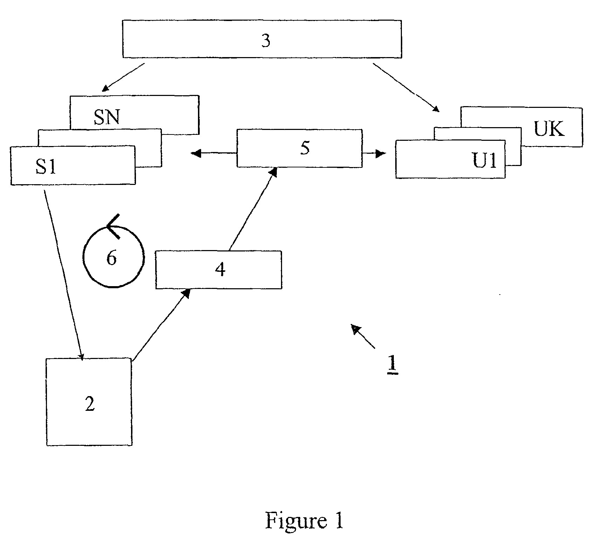

La figure 1 représente schématiquement un système 1 de navigation par satellite GPS utilisant la technologie EGNOS.

Le système 1 comporte :
- un ensemble de satellites GPS 3,
- des stations de réception S1 à SN,
- un calculateur 2,
- une station de transmission 4,
- un satellite géostationnaire 5,
- des utilisateurs U1 à UK.

Dans le cas de EGNOS, les stations de réception S1 à SN sont des stations de type RIMS (Remote Integrity and Monitoring Station) et sont actuellement au nombre de 34.

Le calculateur 2 est du type CPF (Central Process Facility). Par soucis de clarté, un seul calculateur 2 est représenté mais on peut également avoir plusieurs calculateurs 2. Ainsi, pour EGNOS, il y a en réalité cinq CPF permettant d'assurer une redondance en cas de différence de calcul et en cas de panne ; à un moment donné, les cinq CPF fonctionnent en permanence. Par contre, à un instant donné, un seul CPF, le CPF actif, fournit les données.

La station de transmission 4 est une station du type NLES (Navigation Land Earth Station), qui transmet les données du CPF actif, qu'elle choisit à chaque seconde parmi les 5 CPF, en fonction de l'indication sur la qualité des calculs que ceux-ci annoncent.

Le satellite géostationnaire 5 est du type Inmarsat III ou ARTEMIS.

Concrètement, l'ensemble de satellites GPS 3 envoie des données de position vers les stations de réception S1 à SN. Ces dernières transmettent notamment ces données au calculateur 2. Là, des données, dites d'augmentation, sont calculées par le calculateur 2. Ces données d'augmentations permettent par exemple d'assurer les fonctions suivantes :
- Corrections différentielles de base : diffusion de corrections d'éphémérides et d'horloges relatives aux satellites GPS 3,
- Corrections différentielles précises : diffusion de corrections ionosphériques relatives aux satellites GPS 3,
- Intégrité qui sera détaillée plus loin.

Les données d'augmentations sont combinées pour être envoyées vers la station de transmission 4 chargée de transmettre ces données vers le satellite géostationnaire 5.

Le satellite géostationnaire 5 redistribue les données d'augmentation aux utilisateurs U1 à UK qui reçoivent également des signaux de navigation des satellites GPS 3. Les signaux de navigation combinés aux données d'augmentation permettent à un utilisateur de déterminer sa position avec une précision accrue.

Les données d'augmentation doivent être fournies par le calculateur 2 avec une certaine intégrité, c'est à dire une capacité à fournir des données d'augmentation en indiquant aux utilisateurs avec une grande probabilité si ces données d'augmentation sont fiables et utilisables, induisant ainsi un haut niveau de sécurité, compatible avec les quantifications déterminées par les Aviations Civiles.

Pour émettre ces données d'intégrités, le calculateur 2 a besoin de recevoir en temps réel en retour l'ensemble des données qu'il émet en permanence vers les utilisateurs. Dans le cas contraire, le calculateur se déclare non intègre. Le calculateur vérifie ainsi lui-même les données qu'il a émises. Dans le cas de EGNOS, et comme représenté sur la figure 1, le calculateur CPF 2 reçoit les données qu'il a lui-même émises via le satellite géostationnaire 5 qui ré-émet les données vers le CPF 2 via les stations de réception RIMS S1 à SN. Le trajet des données correspond ainsi à une boucle 6, dite boucle d'intégrité. Le satellite géostationnaire 5 qui émet en bande L (1.6 / 1.4 GHz), a donc une double fonction qui est, d'une part, de transmettre les données d'augmentation vers les utilisateurs et, d'autre part, d'assurer la boucle d'intégrité 6.

Toutefois, une telle solution utilisant un satellite géostationnaire pour assurer la boucle d'intégrité présente certaines contraintes ou difficultés.

Ainsi, le coût d'un satellite géostationnaire est extrêmement prohibitif.

De plus, un certain nombre de pays souhaitant évaluer le gain de service en utilisant un système SBAS du type EGNOS, n'ont pas de satellite géostationnaire disponible.

En outre, une telle solution impose de diffuser les données d'augmentation vers les utilisateurs via le satellite géostationnaire et non via d'autres moyens de diffusion.

La présente invention vise à fournir un système pour la fourniture de données complémentaires, dites données d'augmentation, pour les signaux de navigation par satellite, ledit système offrant l'opportunité de diffuser les données d'augmentation par différents moyens de diffusion sans modifier ou perturber le calculateur de données d'augmentation, l'intégrité du système étant assurée sans utiliser de satellite géostationnaire ou sans avoir à recevoir ce qu'un satellite géostationnaire de navigation diffuse pour le ré-émettre autrement, et donc plus tardivement.

La présente invention propose à cet effet un serveur de données utilisé dans un système pour la fourniture de données complémentaires, dites données d'augmentation, pour les signaux de navigation par satellite, dits signaux utilisateurs, ledit système comportant au moins un calculateur pour la détermination desdites données d'augmentation, lesdites données d'augmentation étant déterminées à partir de données transmises par au moins une station de réception recevant des informations de navigation envoyées par au moins un satellite, ledit serveur étant caractérisé en ce qu'il comporte :
- une première entrée pour recevoir lesdites données d'augmentation transmises par ledit calculateur,
- une première sortie pour émettre lesdites données d'augmentation vers au moins un utilisateur,
- une deuxième sortie pour ré-émettre lesdites données d'augmentation vers ledit calculateur avec un retard prédéterminé par rapport à la réception sur ladite première entrée.

Grâce à l'invention, la boucle d'intégrité est assurée par le serveur de données d'augmentation. Ce serveur fournit sur sa deuxième sortie une rétroaction des données d'augmentation vers le calculateur en simulant un retard de transmission tel qu'il aurait été induit par la présence d'un satellite géostationnaire. De cette manière, le calculateur fonctionne de la même façon qu'avec un satellite géostationnaire mais sans la présence nécessaire de ce dernier, et ne nécessite aucune modification par rapport aux versions qualifiées (et éventuellement certifiées) par les différents intervenants.

De plus, la première sortie du serveur permet de transmettre les données d'augmentation vers différents moyens de diffusion tels que le réseau INTERNET par exemple. Le système selon l'invention permet donc de dériver les données d'augmentation d'un système de type SBAS (Satellite-Based Augmentation Systems) pour les fournir à un utilisateur sans modifier le calculateur du système SBAS.

Avantageusement, ledit serveur de données comporte une troisième sortie pour ré-émettre au moins une partie desdites données d'augmentation vers ledit calculateur en même temps que l'émission desdites données d'augmentation vers l'utilisateur via ladite première sortie.

De manière avantageuse, ledit serveur comporte une deuxième entrée pour recevoir des données d'informations provenant d'au moins un utilisateur.

Avantageusement, ledit serveur comporte des moyens pour particulariser lesdites données d'augmentation émises via ladite première sortie en fonction desdites données d'informations provenant d'au moins un utilisateur.

De manière particulièrement avantageuse, un numéro d'identification disponible de satellite géostationnaire est attribué au dit serveur.

Avantageusement, un numéro de station de réception virtuelle est attribué au dit serveur.

Selon un mode de réalisation, lesdites données d'augmentation sont déterminées à partir de données transmises par une pluralité de stations de réception, ledit serveur comportant une troisième entrée pour recevoir des données transmises par une desdites stations de réception.

La présente invention a également pour objet un système pour la fourniture de données complémentaires, dites données d'augmentation, pour les signaux de navigation par satellite, dits signaux utilisateurs, ledit système comportant au moins un calculateur pour la détermination desdites données d'augmentation, lesdites données d'augmentation étant déterminées à partir de données transmises par au moins une station de réception recevant des informations de navigation envoyées par au moins un satellite, ledit système étant caractérisé en ce qu'il comporte au moins un serveur de données selon l'invention.

Selon un mode de réalisation avantageux, ledit système comporte une pluralité de calculateurs pour la détermination desdites données d'augmentation, ledit serveur de données d'augmentation incluant des moyens pour sélectionner un calculateur parmi ladite pluralité de calculateur, ladite deuxième sortie dudit serveur ré-émettant lesdites données d'augmentation reçues dudit calculateur sélectionné vers ladite pluralité de calculateurs avec un retard prédéterminé par rapport à la réception desdites données d'augmentation.

Avantageusement, lesdites données d'augmentation ré-émises vers ladite pluralité de calculateurs incluent un identificateur dudit calculateur sélectionné.

De manière avantageuse, ladite sélection est répétée cycliquement à chaque réception desdites données d'augmentation par ledit serveur.

Selon un mode de réalisation particulièrement avantageux, ledit système comporte au moins un premier serveur, dit actif, de données d'augmentation et un deuxième serveur, dit redondant, de données d'augmentation, ledit calculateur transmettant lesdites données d'augmentation vers ladite première entrée dudit serveur actif et ne transmettant pas lesdites données d'augmentation vers ladite première entrée dudit serveur redondant, ledit calculateur comportant des moyens pour inverser les rôles desdits premier et deuxième serveurs, ledit deuxième serveur devenant le serveur actif et ledit premier serveur devenant le serveur redondant.

Avantageusement, lesdits moyens pour inverser les rôles desdits premier et deuxième serveurs sont commandés cycliquement à chaque envoi desdites données d'augmentation.

De manière avantageuse, ledit système comporte des moyens de diffusion connectés à ladite première sortie dudit serveur pour diffuser lesdites données d'augmentation vers les utilisateurs.

Avantageusement, lesdits moyens de diffusion sont le réseau Internet.

Selon un mode de réalisation particulièrement avantageux, ledit système comporte des moyens de routage et de diffusion, lesdites données d'augmentation étant déterminées à partir de données transmises par une pluralité de stations de réception puis routées et diffusées vers ledit calculateur par lesdits moyens de routage et de diffusion, lesdites données d'augmentation ré-émises par ledit serveur étant également routées et diffusées vers ledit calculateur par lesdits moyens de routage et de diffusion.

Avantageusement, ledit système comporte une pluralité de serveurs de données d'augmentation.

D'autres caractéristiques et avantages de la présente invention apparaîtront dans la description suivante de modes de réalisation de l'invention donnés à titre illustratif et nullement limitatif.

Dans les figures suivantes :
- La figure 1 représente schématiquement un système de navigation par satellite pour la fourniture de données d'augmentation selon l'état de la technique,
- La figure 2 représente schématiquement un système pour la fourniture de données d'augmentation pour les signaux de navigation par satellite selon un premier mode de réalisation de l'invention,
- La figure 3 représente schématiquement un système pour la fourniture de données d'augmentation pour les signaux de navigation par satellite selon un deuxième mode de réalisation de l'invention,
- La figure 4 représente schématiquement un système pour la fourniture de données d'augmentation pour les signaux de navigation par satellite selon un troisième mode de réalisation de l'invention.

Dans toutes les figures, les éléments communs portent les mêmes numéros de référence.

La figure 1 a déjà été décrite en relation avec l'état de la technique.

La description suivante des trois modes de réalisation représentés sur les figures 1 à 3 est faite en relation avec la technologie EGNOS mais peut être adaptée à d'autres technologies telles que le WAAS et le MSAS.

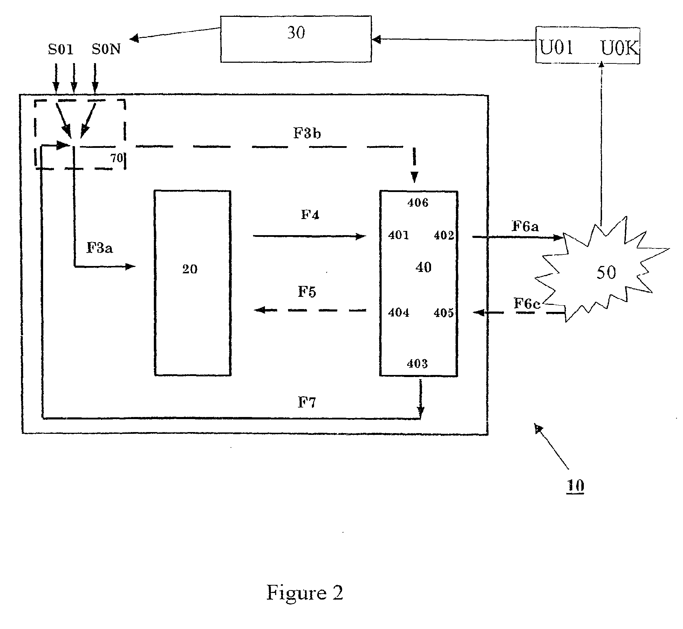

La figure 2 représente schématiquement un système 10 pour la fourniture de données d'augmentation pour les signaux de navigation par satellite selon un premier mode de réalisation de l'invention.

Le système 10 comporte :
- un ensemble de satellites GPS 30,
- des stations de réception S01 à S0N,
- un calculateur 20,
- un serveur de données d'augmentation 40 selon l'invention,
- des moyens de routage et diffusion 70,
- des moyens de diffusion 50,
- des utilisateurs U1 à UK.

Dans le cas de EGNOS, les stations de réception S01 à S0N sont des stations de type RIMS (Remote Integrity and Monitoring Station) et sont actuellement au nombre de 34.

Le calculateur 20 est du type CPF (Central Process Facility).

Le serveur 40 comporte :
- une première entrée 401,
- une deuxième entrée 405,
- une troisième entrée 406,
- une première sortie 402,
- une deuxième sortie 403,
- une troisième sortie 404.

Le système 10 émet une information de navigation grâce à ses satellites 30. Cette information est reçue par les N stations de réceptions S01 à SON.

Chacune de ces stations S01 à S0N transmet chaque seconde les données reçues (message de navigation GPS,...) et mesurées (pseudo-distances,...) au calculateur 20 de type Central Processing Facility (CPF) suivant la flèche F3a ainsi que (optionnellement) à la troisième entrée 406 du serveur 40 suivant la flèche F3b. Les données transmises par les stations de réception S01 à S0N sont routées et diffusées suivant les flèches F3a et F3b par les moyens de routage et de diffusion 70. Ces données sont dans un premier format de message adapté à la technologie EGNOS. Plusieurs messages de ce type sont transmis chaque seconde par chaque station au calculateur 20.

Le calculateur 20 détermine les corrections de navigation à appliquer ainsi que les informations d'intégrité associées et les transmet à la première entrée 401 du serveur 40 suivant la flèche F4. Ces données seront dites par la suite données d'augmentation.

Le serveur 40 est considéré par le calculateur 20 comme une station de transmission de type NLES virtuelle vers un satellite géostationnaire virtuel. Il est à noter qu'un numéro d'identification (PRN) de ce satellite virtuel est à utiliser, choisi parmi ceux non réservés à d'autres usages (la table de réservation est gérée par l'annexe du document de standardisation RTCA MOPS D0229).

Les données d'augmentation sont transmises vers le serveur 40 comme un ensemble de messages utilisant un deuxième format de message adapté à la technologie EGNOS.

Le serveur 40 reçoit d'abord ces messages, extrait le message de navigation NOF (Navigation Overlay Frame) contenu dans le message reçu et transmet à partir de sa première sortie 402, ce message de navigation correspondant aux données d'augmentation aux moyens de diffusion 50.

Les moyens de diffusion 50 diffusent le message aux utilisateurs U01 à U0K. Les moyens de diffusion 50 sont par exemple le réseau Internet. Cette transmission nécessite généralement une encapsulation du message NOF dans un message en lui adjoignant les éléments nécessaires aux couches de protocole de transmission utilisé. Notons cependant que d'autres moyens de diffusion peuvent également être utilisés.

Les utilisateurs reçoivent donc ce message NOF ainsi que des signaux GPS et peuvent utiliser ces deux informations pour calculer une solution de navigation GPS corrigée et vérifier son intégrité grâce aux corrections contenues dans les messages NOF reçus au cours du temps.

De manière à assurer le bon fonctionnement du calculateur 20, il est important de fournir un retour au calculateur 20 du message NOF transmis aux utilisateurs U01 à U0N.

Ce retour est assuré en simulant un retard de transmission qui serait du à l'utilisation d'un satellite géostationnaire. Ceci est assuré par le serveur 40 qui renvoie suivant la flèche F7 à partir de sa deuxième sortie 403, au calculateur 20 le message NOF transmis aux utilisateurs encapsulé dans un message utilisant un troisième format de message adapté à la technologie EGNOS. Le message NOF est renvoyé avec un retard prédéterminé par rapport à la réception sur la première entrée 401 des données d'augmentation provenant du calculateur 20. Ce retard est par exemple égal à 1150 millisecondes après réception des données d'augmentation provenant du calculateur 20. Le message NOF renvoyé transite par les moyens de routage et de diffusion 70 qui se chargent de transmettre le message au calculateur 20 suivant la flèche F3a.

On simule ainsi la réception du message NOF par une station de réception RIMS virtuelle ne recevant des données que du serveur 40 correspondant à un pseudo-satellite géostationnaire. La boucle d'intégrité nécessaire au bon fonctionnement du calculateur 20 est assurée par le chemin F4-F7-F3a.

Il est à noter, à titre de variante, qu'on peut également utiliser un numéro de station de réception RIMS réelle (et non virtuelle) correspondant à l'une des stations de réception S01 à S0N. Dans ce cas, le serveur 40 reçoit des informations de cette station réelle suivant la flèche F3b et mixe ces informations reçues avec le message NOF avant de renvoyer l'ensemble au calculateur 20.

Une autre boucle possible est de fournir un retour rapide au calculateur 20 du message NOF transmis aux utilisateurs. Ceci est assuré par le serveur 40 qui envoie suivant la flèche F5 au calculateur 20, à partir de sa troisième sortie 404 et immédiatement après l'envoi du message NOF aux utilisateurs, ce même message NOF encapsulé dans un message utilisant un quatrième format adapté à la technologie EGNOS.

Un autre flux de données peut être pris en compte par le serveur 40: La flèche F6c correspond à un retour vers la deuxième entrée 405 du serveur 40 d'informations venant d'un utilisateur ou d'un groupe d'utilisateurs. Ce flux autorisé par l'invention n'existe pas dans le schéma de système d'augmentation selon l'état de la technique avec satellite géostationnaire. Ce flux peut être utilisé optionnellement par le serveur 40 pour deux types d'usages:
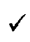 Modifier son comportement vis à vis des utilisateurs et donc le contenu ultérieur des messages transmis suivant la flèche F6a,
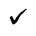 Modifier son comportement par rapport au calculateur 20 et donc le contenu ultérieur des messages transmis suivant les flèches F7 et F5.

Le serveur 40 comporte des moyens logiciels permettant de mettre en oeuvre l'algorithme d'échange de données.

Un exemple d'un tel algorithme est donné dans ce qui suit :

### Répéter pour chaque seconde GPS numéro n, notée Sₙ :

***Etape 1:** Avant Sₙ*+*150ms, encapsuler le NOF(Sₙ₋₁*) *dans un message au format* adapté *et l'envoyer au calculateur 20.*
***Etape 2:** Recevoir les données d'augmentation à la seconde Sₙ.*
***Etape 3:** Extraire le message NOF*(*Sₙ*) *desdites données d'augmentation et le mémoriser pour le cycle suivant.*
***Etape 4:** Encapsuler le NOF*(*Sₙ*) *dans un message au format adapté à l'interface de diffusion utilisée* (*Internet par exemple*) *et l'envoyer aux utilisateurs.*
***Etape 5:** Encapsuler le NOF*(*Sₙ*) *dans un message au format adapté et l'envoyer au calculateur 20 (à noter que l'implémentation EGNOS exige aussi d'envoyer en retour les messages NOF des* 3 *cycles précédents)*

NOF(Sₙ) et NOF(Sₙ₋₁) désignent respectivement les messages NOF correspondant aux données d'augmentation reçues sur l'entrée 401 du serveur 40 aux secondes Sₙ et Sₙ₋₁ et transmises par le calculateur 20.

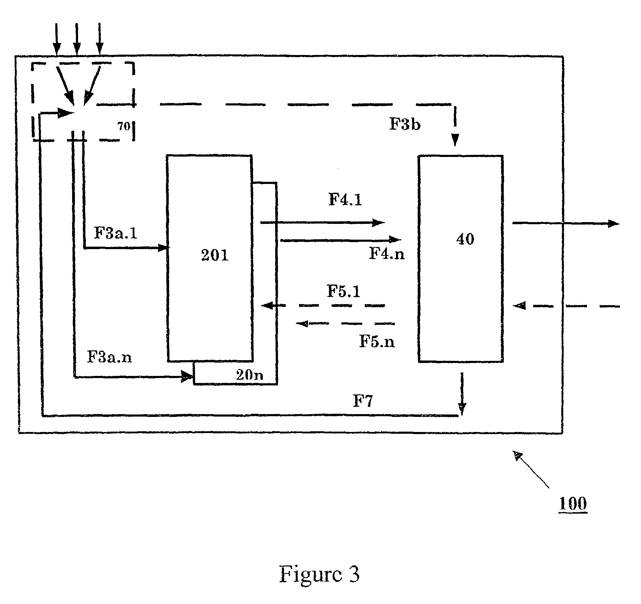

La figure 3 représente schématiquement un système 100 pour la fourniture de données d'augmentation pour les signaux de navigation par satellite selon un deuxième mode de réalisation de l'invention.

Le système 100 ne diffère du système tel que représenté en figure 2 qu'en ce qu'il comporte une pluralité n de calculateurs 201 à 20n.

Par soucis de clarté, les satellites GPS, les stations de réception, les moyens de diffusion et les utilisateurs ne sont pas représentés.

Les calculateurs 201 à 20n reçoivent chaque seconde des données de navigation provenant des stations de réception respectivement suivant les flèches F3a.1 à F3a.n.

Après traitement par les calculateurs 201 à 20n, des données d'augmentation sont transmises par les calculateurs 201 à 20n au serveur 40 respectivement suivant les flèches F4.1 à F4.n.

Le serveur 40 comporte des moyens pour sélectionner un message NOF correspondant aux données d'augmentation reçues d'un calculateur sélectionné. Ce message NOF après encapsulation dans un format adéquat est envoyé vers les utilisateurs et renvoyé vers l'ensemble des calculateurs 201 à 20n avec un retard prédéterminé suivant la flèche F7.

L'algorithme de mise en oeuvre des moyens de sélection peut être par exemple basé sur la présence :
- d'un drapeau d'intégrité dans les messages reçus des calculateurs, indiquant si l'émetteur de ce message considère le calculateur comme intègre,
- d'un drapeau dans les messages reçus des calculateurs indiquant si le calculateur se considère comme sélectionné par le serveur 40,
- de la présence d'une valeur de qualité de service (dite QoS - Quality of Service) dans les messages reçus des calculateurs.

Un retour rapide du message NOF transmis aux utilisateurs vers les calculateurs 201 à 20n est également possible respectivement suivant les flèches F5.1 à F5.n.

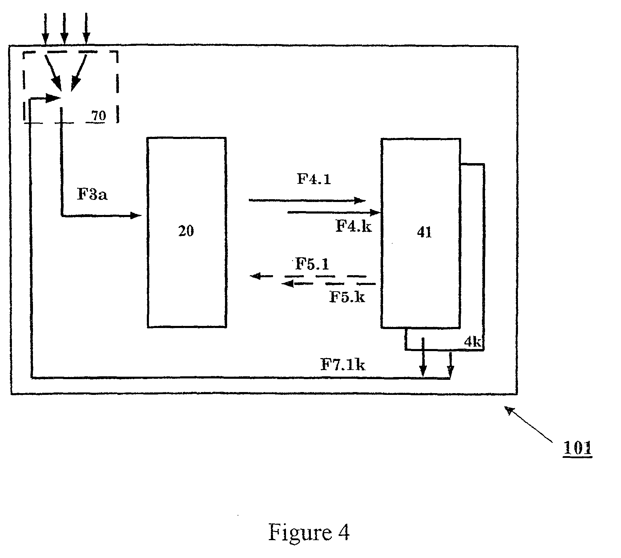

La figure 4 représente schématiquement un système 101 pour la fourniture de données d'augmentation pour les signaux de navigation par satellite selon un troisième mode de réalisation de l'invention.

Le système 101 ne diffère du système tel que représenté en figure 2 qu'en ce qu'il comporte une pluralité k de serveurs 41 à 4k selon l'invention. Les k serveurs 41 à 4k sont par exemple groupés par paires. ; un tel système est notamment utile pour améliorer la disponibilité et la continuité du système.

Prenons ici l'exemple d'une seule paire, c'est à dire k égal à 2 ;

Chaque serveur 41 et 42 de la paire reçoit chaque seconde des messages du calculateur 20 respectivement suivant les flèches F4.1 et F4.2.

Seul l'un des deux serveurs 41 (dit actif) de la paire reçoit du calculateur 20 des messages contenant le message NOF à transmettre aux utilisateurs. L'autre serveur 42 (dit redondant) reçoit un message ne comprenant pas ce message NOF.

Chaque message NOF est ré-émis vers le calculateur 20 suivant la flèche F7.1k.

A chaque cycle d'une seconde, le calculateur peut décider de commuter entre les deux serveurs 41 et 42 de la paire pour rendre actif celui qui ne l'était pas.

Pour fonctionner dans ce cadre, chaque serveur doit incorporer un algorithme qui gère ce passage d'un mode actif à un mode redondant.

Les retours rapides suivant les flèches F5.1 et F5.2 permettent de communiquer le mode actif ou redondant du serveur au calculateur 20.

Bien entendu, l'invention n'est pas limitée aux modes de réalisation qui viennent d'être décrits.

Notamment, on peut également envisager un système comportant à la fois une pluralité de calculateurs et une pluralité de serveurs.

En outre, l'invention n'est absolument pas limitée à la technologie EGNOS et peut être transposée à d'autres technologies telles que les technologies WAAS et MSAS.

Enfin, en référence à la figure 1, le serveur 40 a été décrit comme pouvant recevoir des informations d'une station réelle suivant la flèche F3b et pouvant mixer ces informations reçues avec le message NOF avant de renvoyer l'ensemble au calculateur 20. Ces informations reçues d'une station de réception réelle peuvent également être transmises directement aux utilisateurs à partir de la première sortie 402 du serveur 40.

## Revendications

1. Serveur (40) de données utilisé dans un système (10) pour la fourniture de données complémentaires, dites données d'augmentation, pour les signaux de navigation par satellite, dits signaux utilisateurs, ledit système (10) comportant au moins un calculateur (20) pour la détermination desdites données d'augmentation, lesdites données d'augmentation étant déterminées à partir de données transmises par au moins une station de réception (S01,...S0N) recevant des informations de navigation envoyées par au moins un satellite, ledit serveur (40) étant **caractérisé en ce qu'**il comporte
- une première entrée (401) pour recevoir lesdites données d'augmentation transmises par ledit calculateur,
- une première sortie (402) pour émettre lesdites données d'augmentation vers au moins un utilisateur (U01,...U0k),
- une deuxième sortie (403) pour ré-émettre lesdites données d'augmentation vers ledit calculateur (20), via des moyens de routage et de diffusion (70), avec un retard prédéterminé par rapport à la réception sur ladite première entrée (401).

2. Serveur (40) selon la revendication précédente **caractérisé en ce qu'**il comporte une troisième sortie (404) pour ré-émettre au moins une partie desdites données d'augmentation vers ledit calculateur (20) en même temps que l'émission desdites données d'augmentation vers l'utilisateur (U01,...U0K) via ladite première sortie (402).

3. Serveur (40) selon l'une des revendications précédentes **caractérisé en ce qu'**il comporte une deuxième entrée (405) pour recevoir des données d'informations provenant d'au moins un utilisateur (U01,...U0K).

4. Serveur (40) selon la revendication précédente **caractérisé en ce qu'**il comporte des moyens pour particulariser lesdites données d'augmentation émises via ladite première sortie (402) en fonction desdites données d'informations provenant d'au moins un utilisateur (U01,...U0K).

5. Serveur (40) selon l'une des revendications précédentes **caractérisé en ce qu'**un numéro d'identification disponible de satellite géostationnaire est attribué au dit serveur.

6. Serveur (40) selon l'une des revendications précédentes **caractérisé en ce qu'**un numéro de station de réception virtuelle est attribué au dit serveur.

7. Serveur (40) selon l'une des revendications précédentes **caractérisé en ce que** lesdites données d'augmentation sont déterminées à partir de données transmises par une pluralité de stations de réception (S01,...S0N), ledit Serveur (40) comportant une troisième entrée (406) pour recevoir des données transmises: par une desdites stations de réception (S01,...S0N).

8. Système (10) pour la fourniture de données complémentaires, dites données d'augmentation, pour les signaux de navigation par satellite, dits signaux utilisateurs, ledit système (10) comportant au moins un calculateur (20) pour la détermination desdites données d'augmentation, lesdites données d'augmentation étant déterminées à partir de données transmises par au moins une station de réception (S01,...S0N) recevant des informations de navigation envoyées par au moins un satellite, ledit système (10) étant **caractérisé en ce qu'**il comporte au moins un serveur (40) de données selon l'une des revendications précédentes.

9. Système (100) selon la revendication précédente **caractérisé en ce qu'**il comporte une pluralité de calculateurs (201,...,20n) pour la détermination desdites données d'augmentation, ledit serveur (40) de données d'augmentation incluant des moyens pour sélectionner un calculateur parmi ladite pluralité de calculateur (201,...,20n), ladite deuxième sortie dudit serveur ré-émettant lesdites données d'augmentation reçues dudit calculateur sélectionné vers ladite pluralité de calculateurs (201,...,20n) avec un retard prédéterminé par rapport à la réception desdites données d'augmentation.

10. Système (100) selon la revendication précédente **caractérisé en ce que** lesdites données d'augmentation ré-émises vers ladite pluralité de calculateurs incluent un identificateur dudit calculateur séléctionné.

11. Système (100) selon l'une des revendications 9 ou 10 **caractérisé en ce que** ladite sélection est répétée cycliquement à chaque réception desdites données d'augmentation par ledit serveur.

12. Système (101) selon l'une des revendications 8 à 11 **caractérisé en ce qu'**il comporte au moins un premier serveur (41), dit actif, de données d'augmentation et un deuxième serveur (4k), dit redondant, de données d'augmentation, ledit calculateur (20) transmettant lesdites données d'augmentation vers ladite première entrée dudit serveur actif et ne transmettant pas lesdites données d'augmentation vers ladite première entrée dudit serveur redondant, ledit calculateur (20) comportant des moyens pour inverser les rôles desdits premier et deuxième serveurs, ledit deuxième serveur devenant le serveur actif et ledit premier serveur devenant le serveur redondant.

13. Système (101) selon la revendication précédente **caractérisé en ce que** lesdits moyens pour inverser les rôles desdits premier et deuxième serveurs sont commandés cycliquement à chaque envol desdits données d'augmentation.

14. Système (10) selon l'une des revendications 8 à 13 **caractérisé en ce qu'**il comporte des moyens (50) de diffusion connectés à ladite première sortie (402) dudit serveur (40) pour diffuser lesdites données d'augmentation vers les utilisateurs (U01,...U0K).

15. Système (10) selon la revendication précédente **caractérisé en ce que** lesdits moyens de diffusion (50) sont le réseau internet.

16. Système (10) selon l'une des revendications 8 à 15 **caractérisé en ce qu'**il comporte des moyens (70) de routage et de diffusion, lesdites données d'augmentation étant déterminées à partir de données transmises par une pluralité de stations de réception puis routées et diffusées vers ledit calculateur (20) par lesdits moyens de routage et de diffusion, lesdites données d'augmentation ré-émises par ledit serveur (40) étant également routées et diffusées vers ledit calculateur (20) par lesdits moyens (70) de routage et de diffusion.

17. Système selon l'une des revendications 8 à 16 **caractérisé en ce qu'**il comporte une pluralité de serveurs de données d'augmentation.

## Claims

1. A data server (40) used in a system (10) to provide complementary data known as enhancement data, for satellite navigation signals known as user signals, said system (10) comprising at least one calculator (20) to determine said enhancement data, said enhancement data being determined based on data transmitted by at least one reception station (S01, ...SON) receiving browser information sent by at least one satellite, said server (40) being **characterized in that** it comprises:
- a first input (401) for receiving said enhancement data transmitted by said calculator,
- a first output (402) for transmitting said enhancement data to at least one user (U01,... UOK),
- a second output (403) for transmitting said enhancement data to said calculator (20), via means of routing and broadcasting (70), with a predetermined delay compared to the reception at said first input (401).

2. A server (40) according to the preceding claim, **characterized in that** it comprises a third output (404) to retransmit at least some of said enhancement data to said calculator (20) at the same time as it retransmits said enhancement data to the user (U01, ... UOK) via said first output (402).

3. A server (40) according to one of the preceding claims, **characterized in that** it comprises a second input (405) for receiving information data coming from at least one user (U01,... U0K).

4. A server (40) according to the preceding claims, **characterized in that** it comprises means for singling out said enhancement data transmitted via said first output (402) based on said information data coming from at least one user (U01, ... U0K).

5. A server (40) according to one of the preceding claims **characterized in that** an available geostationary satellite identification number is assigned to said server.

6. A server (40) according to one of the preceding claims **characterized in that** a virtual reception station number is assigned to said server.

7. A server (40) according to one of the preceding claims **characterized in that** said enhancement data is determined based on data transmitted by a plurality of reception stations (S01,... S0N), said server (40) comprises a third input (406) for receiving data transmitted by one of said reception stations (S01,... S0N).

8. A system (10) for providing complementary data known as enhancement data, for satellite navigation signals known as user signals, said system (10) comprising at least one calculator (20) to determine said enhancement data, said enhancement data being determined based on data transmitted by at least one reception station (S01, ...SON) receiving navigation information sent by at least one satellite, said system (10) being **characterized in that** it comprises at least one data server (40) according to one of the preceding claims.

9. A system (100) according to the preceding claim **characterized in that** it comprises a plurality of calculators (201,...,20n) for determining said enhancement data, said enhancement data server (40) including means for selecting a calculator from among said plurality of calculators (201... 20n), said second output of said server retransmitting said enhancement data received from said selected calculator to said plurality of calculators (201...20n) with a predetermined delay compared to the reception of said enhancement data.

10. A system (100) according to the preceding claim **characterized in that** said enhancement data retransmitted to said plurality of calculators include an identifier of said selected calculator.

11. A system (100) according to one of the claims 9 or 10 **characterized in that** said selection is cyclically repeated every time said enhancement data is received by said server.

12. A system (101) according to one of the claims 8 to 11 **characterized in that** it comprises at least one first enhancement data server (41), said to be active, and one second enhancement data server (4k), said to be redundant, said calculator (20) transmitting said enhancement data to said first input of said active server and not transmitting said enhancement data to said first input of said redundant server, said calculator (20) comprising means for reversing the roles of said first and second servers, said second server becoming the active server and said first server becoming the redundant server.

13. A system (101) according to the preceding claim **characterized in that** said means for reversing the roles of said first and second servers are controlled cyclically each time said enhancement data is sent.

14. A system (10) according to one of the claims 8 to 13 **characterized in that** it comprises broadcast means (50) connected to said first output (402) of said server (40) for broadcasting said enhancement data to the users (U01....U0K)

15. A system (10) according to the preceding claim **characterized in that** said broadcast means (50) are the internal network.

16. A system (10) according to one of the claims 3 to 15 **characterized in that** it comprises means (70) of routing and broadcasting, said enhancement data being determined based on data transmitted by a plurality of reception stations and then routed and broadcast to said calculator (20) by said means of routing and broadcasting, said enhancement data retransmitted by said server (4) also being routed and broadcast to said calculator (20) by said means (70) of routing and broadcasting.

17. A system according to one of the claims 8 to 16 **characterized in that** it comprises a plurality of enhancement data servers.

## Patentansprüche

1. Datenserver (40), der in einem System (10) verwendet wird, um zusätzliche Daten, sogenannte Ergänzungsdaten, für die Satellitennavigationssignale, sogenannte Nutzersignale, bereitzustellen, wobei das besagte System (10) mindestens einen Rechner (20) für die Bestimmung der besagten Ergänzungsdaten umfasst, wobei die besagten Ergänzungsdaten ausgehend von von mindestens einer Empfangsstation (S01, ... S0N), welche von mindestens einem Satelliten gesendete Navigationsinformationen empfängt, übertragenen Daten bestimmt werden, wobei der besagte Server (40) **dadurch gekennzeichnet ist, dass** er umfasst:
- Einen ersten Eingang (401) zum Empfangen der besagten von dem besagten Rechner übertragenen Ergänzungsdaten,
- einen ersten Ausgang (402) zum Senden der besagten Ergänzungsdaten an mindestens einen Nutzer (U01,..U0K),
- einen zweiten Ausgang (403) zum Senden der besagten Ergänzungsdaten an den besagten Rechner (20), über Routing- und Übertragungsmittel (70), mit einer vorbestimmten Verzögerung in Bezug auf den Empfang an dem besagten ersten Eingang (401).

2. Server (40) nach dem vorstehenden Anspruch, **dadurch gekennzeichnet ist, dass** er einen dritten Ausgang (404) zum erneuten Senden mindestens eines Teils der besagten Ergänzungsdaten an den besagten Rechner (20) gleichzeitig mit der Übertragung der besagten Ergänzungsdaten an den Nutzer (U01,..U0K) über den besagten ersten Ausgang (402) umfasst.

3. Server (40) nach einem der vorstehenden Ansprüche, **dadurch gekennzeichnet ist, dass** er einen zweiten Eingang (405) zum Empfangen von von mindestens einem Nutzer (U01, ... UOK) eingehenden Informationsdaten.

4. Server (40) nach dem vorstehenden Anspruch, **dadurch gekennzeichnet ist, dass** er Mittel zum Anpassen der besagten über den besagten ersten Ausgang (402) gesendeten Ergänzungsdaten in Abhängigkeit von den besagten von mindestens einem Nutzer (U01, ... UOK) eingehenden Informationsdaten umfasst.

5. Server (40) nach einem der vorstehenden Ansprüche, **dadurch gekennzeichnet ist, dass** dem besagten Server eine verfügbare Identifikationsnummer eines geostationären Satelliten zugeordnet wird.

6. Server (40) nach einem der vorstehenden Ansprüche, **dadurch gekennzeichnet ist, dass** dem besagten Server die Nummer einer virtuellen Empfangsstation zugeordnet wird.

7. Server (40) nach einem der vorstehenden Ansprüche, **dadurch gekennzeichnet ist, dass** die besagten Ergänzungsdaten ausgehend von von einer Mehrzahl von Empfangsstationen (S01,...S0N) übertragenen Daten bestimmt werden, wobei der besagte Server (40) einen dritten Eingang (406) zum Empfangen der von einer der besagten Empfangsstationen (S01,... S0N) übertragenen Daten umfasst.

8. System (10) für die Bereitstellung von zusätzlichen Daten, sogenannte Ergänzungsdaten, für die Satellitennavigationssignale, sogenannte Nutzersignale, wobei das besagte System (10) mindestens einen Rechner (20) für die Bestimmung der besagten Ergänzungsdaten umfasst, wobei die besagten Ergänzungsdaten ausgehend von von mindestens einer Empfangsstation (S01, ... S0N), welche von mindestens einem Satelliten gesendete Navigationsinformationen empfängt, übertragenen Daten bestimmt werden, wobei das besagte System (10) **dadurch gekennzeichnet ist, dass** es mindestens einen Datenserver (40) gemäß einem der vorstehenden Ansprüche umfasst.

9. System (100) nach dem vorstehenden Anspruch, **dadurch gekennzeichnet, dass** es eine Mehrzahl von Rechnern (201,...,20n) für die Bestimmung der besagten Ergänzungsdaten umfasst, wobei der besagte Ergänzungsdatenserver (40) Mittel zum Auswählen eines Rechners unter der besagten Mehrzahl von Rechnern (201,...20n) umfasst, wobei der besagte zweite Ausgang des besagten Servers die besagten von dem besagten ausgewählten Rechner empfangenen Daten mit einer vorbestimmten Verzögerung in Bezug auf den Empfang der besagten Ergänzungsdaten erneut an die besagte Mehrzahl von Rechnern (201...20n) sendet.

10. System (100) nach dem vorstehenden Anspruch, **dadurch gekennzeichnet, dass** die besagten erneut an die besagte Mehrzahl von Rechnern gesendeten Ergänzungsdaten eine Kennung des besagten ausgewählten Rechners enthalten.

11. System (100) nach einem der Ansprüche 9 oder 10, **dadurch gekennzeichnet, dass** die besagte Auswahl bei jedem Empfang der besagten Ergänzungsdaten an dem besagten Server zyklisch wiederholt wird.

12. System (100) nach einem der Ansprüche 8 bis 11, **dadurch gekennzeichnet, dass** es mindestens einen ersten Ergänzungsdatenserver (41), aktiv genannt, und einen zweiten Ergänzungsdatenserver (4k), redundant genannt, umfasst, wobei der besagte Rechner (20) die besagten Ergänzungsdaten an den besagten ersten Eingang des besagten aktiven Servers überträgt und die besagten Ergänzungsdaten nicht an den besagten ersten Eingang des besagten redundanten Servers überträgt, wobei der besagte Rechner (20) Mittel zum Invertieren der Rollen des besagten ersten und des besagten zweiten Servers umfasst, wobei der besagte zweite Server zum aktiven Server wird und der besagte erste Server zum redundanten Server wird.

13. System (101) nach dem vorstehenden Anspruch, **dadurch gekennzeichnet, dass** die besagten Mittel zum Invertieren der Rollen des besagten ersten und des besagten zweiten Servers bei jedem Versenden der besagten Ergänzungsdaten zyklisch gesteuert werden.

14. System (10) nach einem der Ansprüche 8 bis 13, **dadurch gekennzeichnet, dass** es Übertragungsmittel (50), die an den besagten ersten Ausgang (402) des besagten Servers (40) angeschlossen sind, für das Übertragen der besagten Ergänzungsdaten an die Nutzer (U01....UOK) umfasst.

15. System (10) nach dem vorstehenden Anspruch, **dadurch gekennzeichnet, dass** die besagten Übertragungsmittel (50) das Internet-Netzwerk sind.

16. System (10) nach einem der Ansprüche 8 bis 15, **dadurch gekennzeichnet, dass** es Routing- und Übertragungsmittel (70) umfasst, wobei die besagten Ergänzungsdaten ausgehend von von einer Mehrzahl von Empfangsstationen übertragenen Daten bestimmt und anschließend über die besagten Routing- und Übertragungsmittel an den besagten Rechner (20) geroutet und übertragen werden, wobei die besagten erneut von dem besagten Server (40) gesendeten Ergänzungsdaten ebenfalls über die besagten Routing- und Übertragungsmittel (70) an den besagten Rechner (20) geroutet und übertragen werden.

17. System nach einem der Ansprüche 8 bis 16, **dadurch gekennzeichnet, dass** es eine Mehrzahl von Ergänzungsdatenservern umfasst.
